# EUROPEAN PATENT APPLICATION

(11) **EP 4 465 266 A1**
(43) Date of publication of application: **20.11.2024**
(21) Application number: 22920494.6
(22) Date of filing: 05.12.2022
(51) Int. Cl.: G07F 7/02, G07D 11/14, G07D 11/24, G07D 11/32

(54) **BANKNOTE-PROCESSING APPARATUS**

(30) Priority: 14.01.2022 JP 2022004066
(71) Applicant: Japan Cash Machine Co., Ltd., Osaka-shi, Osaka 556-0011 (JP)
(72) Inventor: OKAWA Katsutoshi, Osaka-shi, Osaka 547-0035 (JP); SEKI Toru, Osaka-shi, Osaka 547-0035 (JP)
(74) Representative: Flach Bauer & Partner Patentanwälte mbB
(86) International application number: PCT/JP2022/044738
(87) International publication number: WO 2023/135974

(57) **Abstract**

[Problem]

A bill processor is provided with a bill validator that may receive, from a mobile terminal, telecommunication signals inclusive of electronic currency information to store it in a stacker memory of a bill stacker.

[Solution to Problem]

The bill processor comprises an interface (80) for receiving electronic currency information transmitted from a mobile terminal (70), a bill validator (1) that has a validation transceiver (3) for receiving the electronic currency information transmitted from the interface (80) and a bill stacker (2) for accumulating bills considered genuine by and forwarded from the bill validator (1) so that the validation transceiver (3) of the bill validator (1) transmits electronic currency information to a stacker transceiver (21) of a bill stacker (2) that then sends the information to a stacker memory (22) of the bill stacker (2) to finally store the information in the stacker memory (22).

## Description

### Technical Field

This invention relates to a bill processor, in particular of the type that comprises a bezel attached to a bill validator and a bill stacker wherein the bezel comprises an interface for receiving electronic currency information from a mobile terminal through remote communication to store the information in the bill stacker, and read out from the bill stacker the information to the mobile terminal.

### Background Art

For example, Patent Document 1 below shows document handlers that each comprise a recoverable bill stacker filled with bills to identify and confirm the original document handlers in view of the recovered bill stackers. Specifically, each of these document handlers has an individual card with printed symbols for identifying the document handler to optically or magnetically read out the symbols on the cards by a detection sensor of a bill validator so that the symbols are stored in a symbol memory of a validation controller in the bill validator. Arranged off the bill validator is a stacker device that has an amount memory to receive from the validation controller the symbol information for indicating the symbols, bill information of bill amounts and the number of bills the validation controller has considered genuine and to store them. A readout device may retrieve necessary bill information and symbol information from the amount memory to identify the original document handler of the bill stacker in view of the symbol retrieved by the readout device and to compare the total amount of collected bills from the bill stacker with the sum from the readout device.

Patent Document 2 discloses a document stacker and document handling system that may easily read out information retained in a memory in the document stacker for storing various kinds of information and a radio communicator for sending information through radio communication to mobile terminals. The document handling system comprises the document stacker and a document administrator for automatically stacking into the document stacker, bills or valuable papers that are put into a plurality of amusement facilities.

### Prior Art Documents

### Patent Literature

Patent Document 1: Japanese Patent No. 3,909,841
Patent Document 2: Japanese Patent No. 6,793,272

### Summary of Invention

### Technical Problem

Up to now, prior arts have never suggested such a bill processor that comprises a bill validator for receiving telecommunication signals inclusive of electronic currency information such as electronic money or the like transmitted from a mobile terminal to store the electronic currency information in a stacker memory of a bill stacker or to throw or save electronic money in the bill stacker. Also, no such bill processors have been proposed that may record both of valuable papers like bills and electronics money in a bill stacker to intensively manage them at one place. Moreover, no bill processors have been developed that comprise a bill validator for receiving from a mobile terminal, telecommunication signals inclusive of request signals to store the telecommunication signals in a stacker memory of a bill stacker. Such bill processors may preferably comprise a retrieval device for reading out monetary information relevant or suitable to the demand signals received from outside and for adversely transmitting the monetary information to the mobile terminal to indicate the received information on a display of the mobile terminal. Accordingly, an object of the present invention is to provide a bill processor that can resolve the above-mentioned problems.

### Solution to Problem

A first bill processor according to the present invention, comprises an interface (80) for receiving electronic currency (e-money) information transmitted from a mobile terminal (70), a bill validator (1) for discriminating a bill inserted from an insertion opening (5) to comprise a validation transceiver (3) for receiving the e-money information transmitted from the interface (80), and a bill stacker (2) for accumulating a bill considered genuine by and forwarded from the bill validator (1). The bill stacker (2) comprises a stacker transceiver (21) for receiving electronic currency information transmitted from the validation transceiver (3) of the bill validator (1) and a stacker memory (22) for storing the electronic currency information sent from the stacker transceiver (21).

When a bill is inserted into the bill validator (1), it discriminates the bill and when it is considered genuine, the bill is transported into the bill stacker (2) to accumulate it therein. The first bill processor of the present invention may allow someone to operate the mobile terminal (70) that can transmit e-money information of radio signals toward the bill validator (1) so that the validation transceiver (3) of the bill validator (1) receives e-money information through interface (80). Then, validation transceiver (3) transmits the information to stacker transceiver (21) of bill stacker (2) and to throw or store the e-money (monetary information) in stacker memory (22). In this way, e-money may be sent from mobile terminal (70) to safely accumulate it in stacker memory (22). The term "currency information" herein means the monetary concept that includes money information, electronic money and bill discrimination information.

A second bill processor of the present invention, comprises a bezel (8) that includes an interface (80) for receiving electronic currency information transmitted from a mobile terminal (70), a bill validator (1) for discriminating a bill inserted into an insertion opening (5) of the bezel (8) and a bill stacker (2) for accumulating the bills considered genuine by and supplied from the bill validator (1). The bill validator (1) comprises a validation transceiver (3) for receiving electronic currency information sent from the interface (80), and the bill stacker (2) comprises a stacker transceiver (21) for receiving electronic currency information transmitted from validation transceiver (3) of bill validator (1) and a stacker memory (22) for storing the electronic currency information sent from stacker transceiver (21). Validation transceiver (3) of bill validator (1) receives a request signal forwarded from interface (80) to forward it to stacker transceiver (21) of bill stacker (2) that retrieves in stacker memory (22) money information relevant or suitable to the received request signal and transmits the detected money information to mobile terminal (70) through interface (80) to exhibit the money information on display (75) of mobile terminal (70).

When a user throws a genuine bill in bill validator (1) of the second bill processor of the present invention, it is stacked in bill stacker (2) that simultaneously transmits the discrimination information of the bill to stacker transceiver (21) to store the information in stacker memory (22).

To refer to the accumulated money amounts stored in stacker memory (22), someone sends a request information signal from mobile terminal (70) to interface (80) of bezel (8) that then transmits the information signal to validation transceiver (3) that in turn diverts it to stacker transceiver (21) of bill stacker (2). Stacker transceiver (21) makes a search in stacker memory (22) of saved monetary information relevant to the received request information and retrieves the monetary information in stacker memory (22) and send it to mobile terminal (70) through interface (80). Mobile terminal (70) exhibits the received monetary information on display (75) for user's view to confirm the related monetary information accumulated in stacker memory (22).

### Brief Description of Drawings

[Figure 1] A sectional view indicating the outline of a bill processor according to the present invention for transmitting electronic information:
[Figure 2] A block diagram in electric configuration of the bill processor of the invention;
[Figure 3] A sectional view of a bezel formed with an inlet of a bill and provided with an interface;
[Figure 4] An exploded sectional view of a bracket of the bezel before supporting a camera device;
[Figure 5] A sectional view of the bracket and camera device both secured on the table of the bezel;
[Figure 6] A perspective view of a frame before the camera device is attached to the frame;
[Figure 7] A perspective view of the frame after the camera device is attached to the frame;
[Figure 8] A perspective view of the frame before the bezel is attached to the frame;
[Figure 9] A perspective view of a front portion of a bill validator and electric wiring hardware connected between the bill validator and camera device in the bezel removed from the bill validator;
[Figure 10] A perspective view of the bill validator to which the bezel is attached;
[Figure 11] An operational flow chart to store bill image information and face image information;
[Figure 12] An operational flow chart to switch a shift circuit between telecommunication-available condition and bill-available condition;
[Figure 13] An operational flow chart added to Figure 12 to return monetary information to a mobile terminal that transmits a request signal; and
[Figure 14] A representative monetary indication shown on a display of the mobile terminal.

### Embodiments to carry out the invention

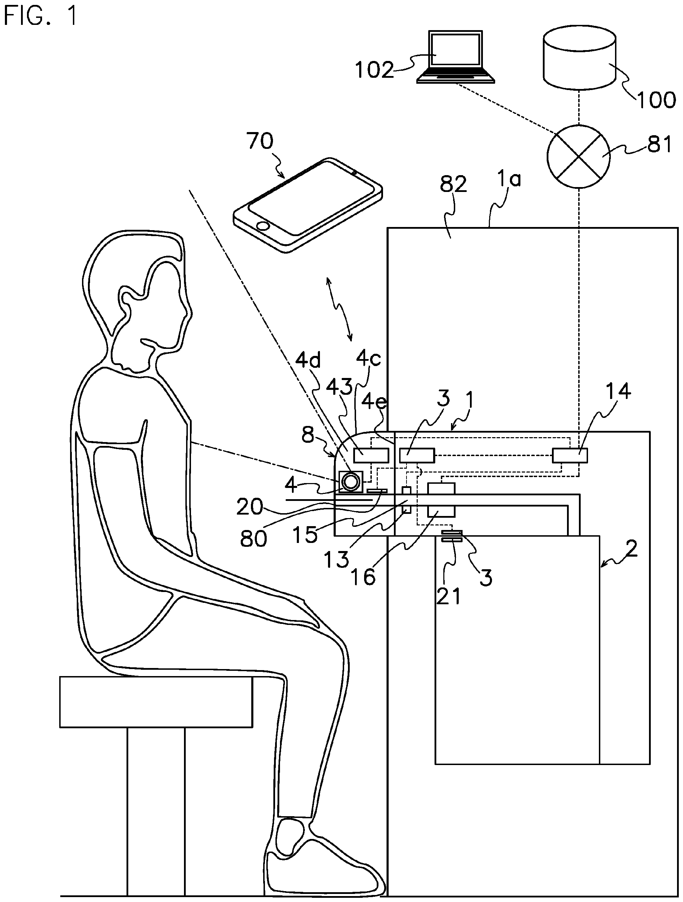

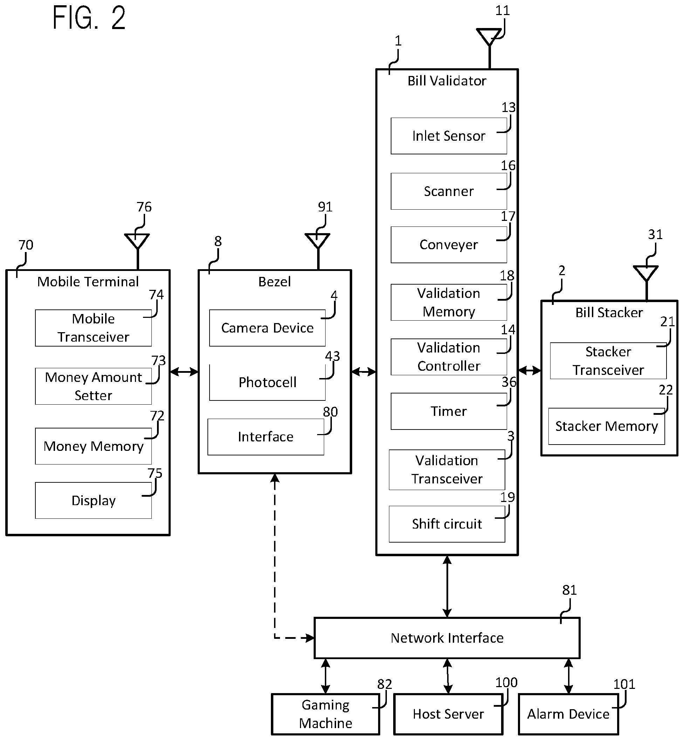

Figure 1 shows a sectional view of the bill processor according to the present invention in use by a user, and Figure 2 illustrates a block diagram of electric configuration of the invention's bill processor.

As shown in Figures 1 and 2, the first bill processor according to the present invention, comprises a bezel (8) that has an interface (80) for receiving electronic currency (e-money) information signals transmitted from a mobile terminal (70) owned by a user, a bill validator (1) for discriminating a bill inserted through bezel (8) and provided with a validation transceiver (3) for receiving the e-money information signals transmitted from interface (80) of bezel (8), and a bill stacker (2) for accumulating bills considered genuine by and forwarded from bill validator (1). Interface (80) comprises a bezel antenna (91) that may receive e-money information signals from mobile terminal (70) through telecommunication therebetween, and e-money information signals are finally stored and accumulated in stacker memory (22) of bill stacker (2).

Mobile terminal (70) owned by a user as shown in Figure 2, comprises a money memory (72) for storing e-money information such as electronic money, a money amount setter (73), a mobile transceiver (74) and a display (75). A user may set a money amount of e-money in money amount setter (73) and transmit the e-money signals from mobile transceiver (74) while e-money information of set amount is radiated outside together with carrier radio waves from money memory (72) through mobile transceiver (74) and a mobile antenna (76). Mobile terminal (70) comprises for example a smart phone or tablet terminal provided with display (75) such as a touch panel.

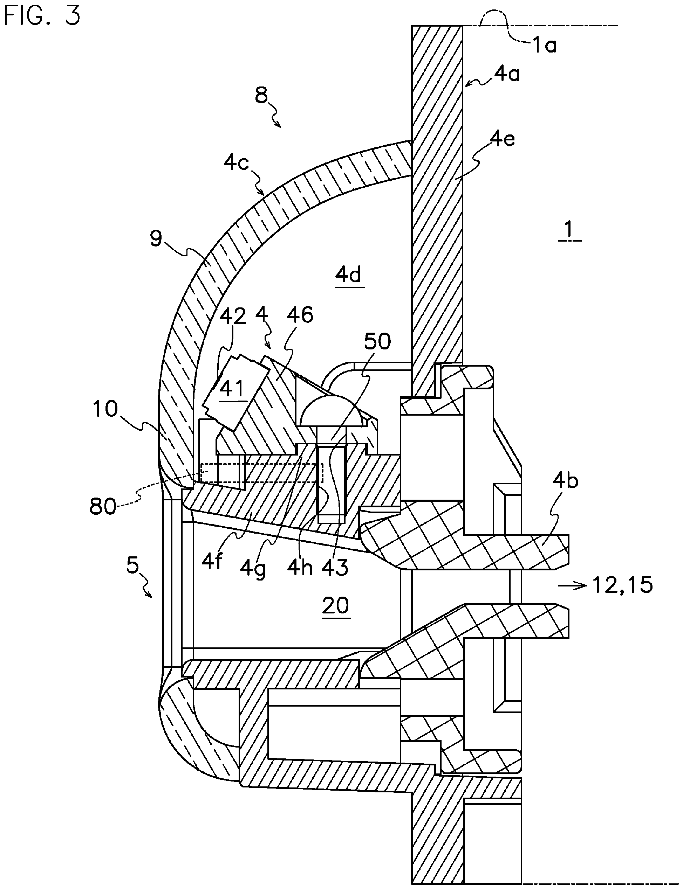

Bezel (8) shown in Figure 2, comprises a camera device (4) provided with a lens (42) of Figure 3, a photocell (43) built in camera device (4) for photoelectrically converting image information received through lens (42) into electric signals, and an interface (80) for telecommunication of monetary signals with mobile terminal (70). Interface (80) also receives electric signals from photocell (43) and does communication with a valication controller (14) of bill validator (1). A shutter actuator not shown in camera device (4), photocell (43) and interface (80) all are electrically connected to validation controller (14) in bill validator (1) that is also connected to a stacker transceiver (21) and stacker memory (22) in a bill stacker (2).

Bill validator (1) with bezel (8) shown in Figures 1 to 3, comprises a passageway (15) communicated with insert opening (5) of frame (4f) and bill inlet (12), an inlet sensor (13) for detecting an inserted bill into bill inlet (12), a conveyer (17) for moving the bill put into bill inlet (12) along passageway (15), a scanner (16) for optically scanning surface images of the bill transmitted through passageway (15), a validation memory (18) for storing boh face image information sent from camera device (4) and bill's surface image information received from scanner (16), a validation controller (14) for receiving a detection signal from inlet sensor (13) to drive conveyer (17) and also for storing in validation memory (18) face image information, bill image information and the time when validatiorn controller (14) receives the information, a timer (36) for generating clock signals to validation controller (14), a validation transceiver (3) for storing in stacker momory (22) face image information and bill image information saved in validation memory (18) and sent through stacker transceiver (21) of bill stacker (2), and a shift circuit (19) for switching on or off condition of each antenna to prevent interference of radio wave signals during the communication.

If necessary, validation controller (14) can read out surface image information of bills stored in validation memory (18). Stacker transceiver (21) of bill stacker (2) comprises a stacker antenna (31) for telecommunication with a validation antenna (11) of validation transceiver (3). Shift circuit (19) of bill validator (1) serves to switch on or off communications between validation antenna (11) of validation transceiver (3) and bezel antenna (91) of interface (80) and between validation antenna (11) of validation transceiver (3) and stacker antenna (31) of stacker transceiver (21). In a telecommunication-available condition between mobile terminal (70) and interface (80), shift circuit (19) keeps off communication between validation antenna (11) of validation transceiver (3) and stacker antenna (31) of stacker transceiver (21) for prevention of radio interference, and at the same time, keeps on communication between validation antenna (11) of validation transceiver (3) and bezel antenna (91) of interface (80) to allow telecommunication between mobile terminal (70) and interface (80). In a bill-available condition to insert a bill into a passageway (15) of the bill validator (1), shift circuit (19) keeps off communication between validation antenna (11) of validation transceiver (3) and bezel antenna (91) of interface (80) for avoidance of crosstalk, and at the same time, keeps on communication between validation antenna (11) of validation transceiver (3) and stacker antenna (31) of stacker transceiver (21) to allow telecommunication between validation transceiver (3) and stacker transceiver (21).

If necessary, interface (80) of bezel (8) and bill validator (1) may be connected for communication to a network interface (81) through which they may be connected to a gaming machine (82), host server (100) and alarm device (101).

As illustrated in Figure 3, bezel (8) comprises a frame (4a) secured to a housing (1a) of bill validator (1), a camera device (4) mounted on frame (4a) for taking color or monochrome pictures or images of user face or upper body appearance, and a cover (4c) removably attached to frame (4a) for concealing camera device (4). Frame (4a) is formed of resin materials, and cover (4c) is formed of glass or resin materials. In particular, cover (4c) is made of light-transparent glass or synthetic resins such as acrylic or polycarbonate resins coated by vapor deposition or coating or spreading with metallic film materials such as light-transparent and light-reflective metallic film of nickel, silver or aluminum to form a half- or magic-mirror structure in cover (4c).

Cover (4c) as a half-mirror has a visible-light-permeation ranging between preferably 30% and 70%, the best 50% that would prevent user's external observation on camera device (4) within frame (4a). Cover (4c) may be removably attached to frame (4a), by the detachable structure provided between frame (4a) and cover (4c) with a screw or resilient hook to define by cover (4c) a dark room (4d) for concealingly holding camera device (4). It comprises a shutter not shown and a shutter actuator drivingly connected to validation controller (14) in bill validator (1) to timely operate the shutter that may be selected of global or rolling shutters. Global shutters may be used to take pictures of less strain image at once that is effective to instantaneously take front images of users. In cooperation with frame (4a), light-permeable cover (4c) defines a dark room (4d) to reflect extraneous lights on outer surfaces of cover (4c) in order to bar user's visual observation from outside to camera device (4) within dark room (4d). Cover (4c) may effectively prevent user's dangerous touch or tamper with camera device (4) into damage with their hands. Face image information of users can be preserved to prepare usage history of users. When bill validator (1) receives a fake bill, it can identify one of the criminals in view of preserved user face images for improvement in security.

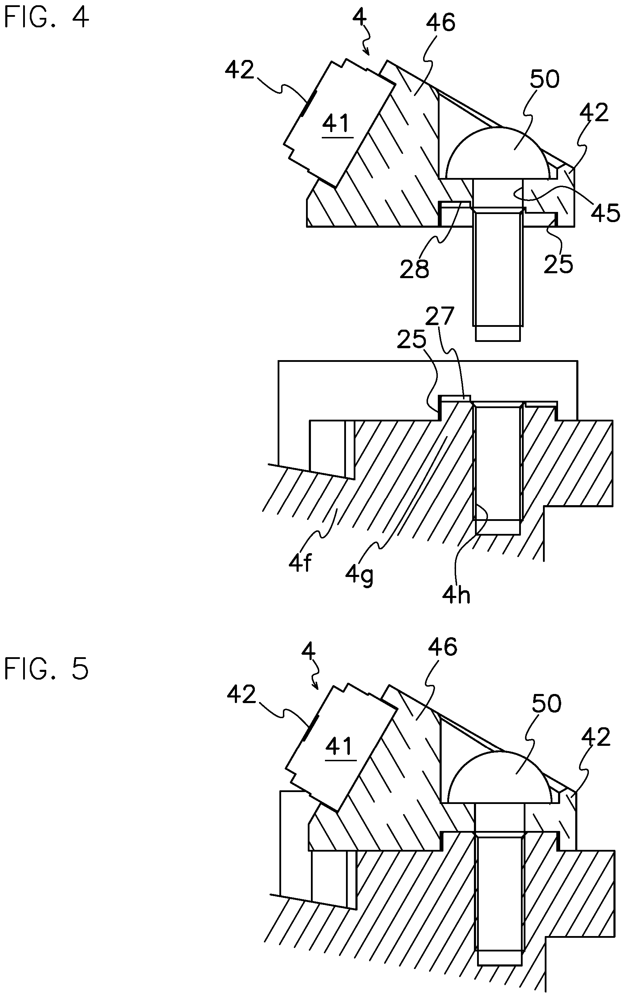

Frame (4a) comprises a back plate (4e) vertically attached in front of bill validator (1), an inlet rim (4f) horizontally secured to back plate (4e) to guide an inserted bill into an opening (20) formed within inlet rim (4f), and a table (4g) formed on top of inlet rim (4f) to support camera device (4) on table (4g). Camera device (4) is mounted on table (4g) of inlet rim (4f) secured to back plate (4e) to arrange the main optical axis of lens (42) in camera device (4) at a predetermined inclined angle between 15 and 30 degrees relative to a horizontal plane as shown in Figures 2 and 4 so that camera device (4) is set to have the view coverage angle between 45 and 80 degrees to the horizontal plane in order to definitely shoot a face of the user keeping seated in front of bezel (8).

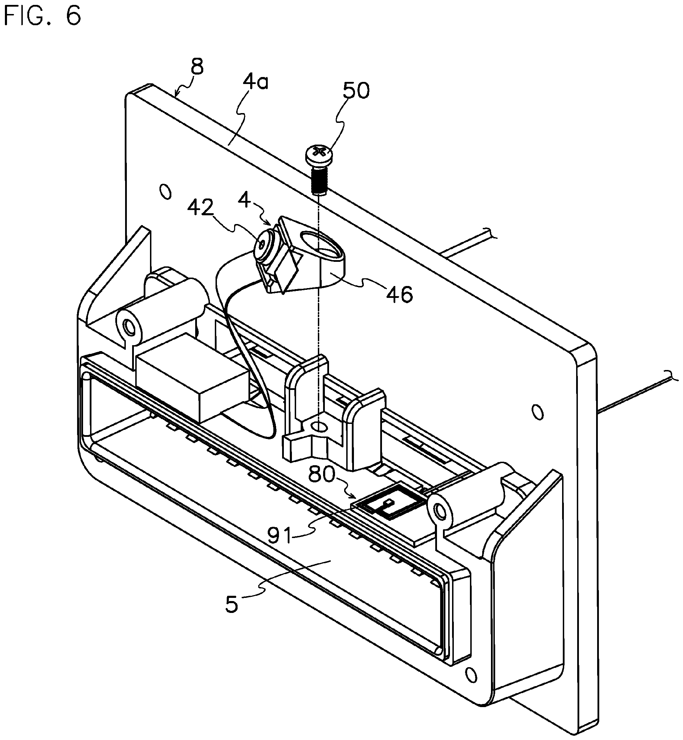

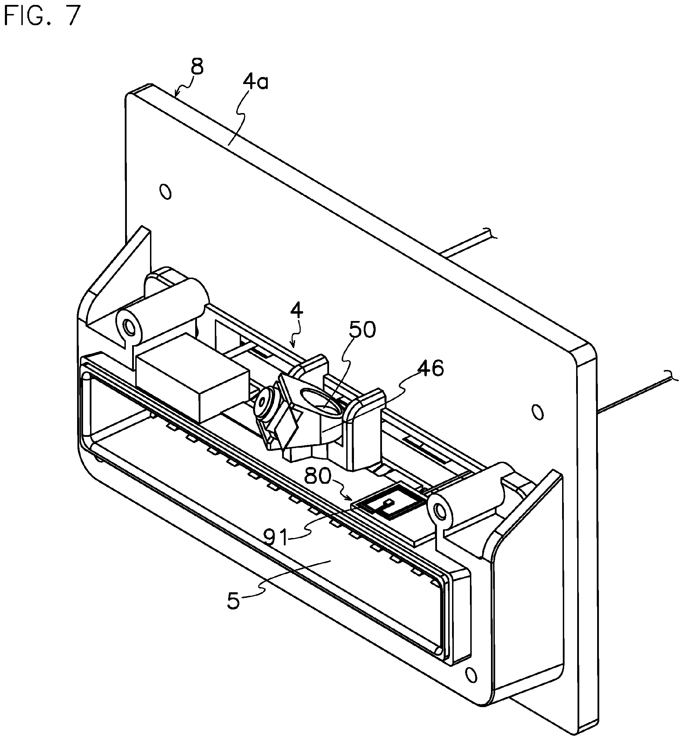

As shown in Figures 3 and 4, table (4g) of inlet rim (4f) has a threaded hole (4h), and camera device (4) comprises a camera body (41) for supporting a lens (42) through which lights reflected on a user's face can pass, and a bracket (46) formed with a perforation (45) for supporting camera body (41). As depicted in Figures 6 and 7, a screw (50) is vertically put into perforation (45) of bracket (46) and engaged with threaded hole (4h) of table (4g) to rotatably arrange camera body (41) on a horizontal plane around a vertical shaft of screw (50) so that it is possible to vary horizontal shooting directions of lens (42) of camera device (4) or to change horizontal directions of camera device (4) toward user's face in order to set, settle or keep camera device (4) at preferable shooting angles. Camera device (4) can take face images of the user keeping seated in front of bill validator (1) by receiving lights through cover (4c) to save the face images in bill validator (1).

In the embodiment shown in Figure 4, table (4g) of frame (4a) is formed with circumferentially intermittent annular projections (27), and formed in parallel with annular projections (27) are circumferentially intermittent annular grooves (28) in bracket (46) of camera body (41) to cause the engagement of annular grooves (27, 28) to temporally secure camera device (4) against rotation around the axis of screw (50). Specifically, when bracket (46) for supporting camera body (41) is put and rotated on table (4g) of frame (4a), annular grooves (28) of bracket (46) may come into engagement with annular projections (27) of table (4g) and then screw (50) is tightened into threaded hole (4h) to temporally stop rotation of camera device (4) around screw (50) for fixture of camera device (4). When loosening screw (50) in threaded hole (4h) of table (4g) to slightly raise bracket (46) over table (4g), annular grooves (28) of bracket (46) are released from engagement with annular projections (27) of table (4g) so that bracket (46) and camera device (4) can be integrally rotated, then moved to a desired angular position around screw (50), and there, annular projections (27) of table (4g) are meshed with grooves (28) of bracket (46), while preventing further rotation of camera device (4) around screw (50).

This meshed structure may also be accomplished by adverse structure of annular projections (27) and grooves (28) formed in bracket (46) and table (4g) to rotate camera device (4) for its fixing in a reverse structure of this impaction arrangement. After annular projections (27) and grooves (28) are engaged with each other, screw (50) may be tightened to firmly secure camera device (4) to table (4g) against the rotation and movement unless loosening screw (50).

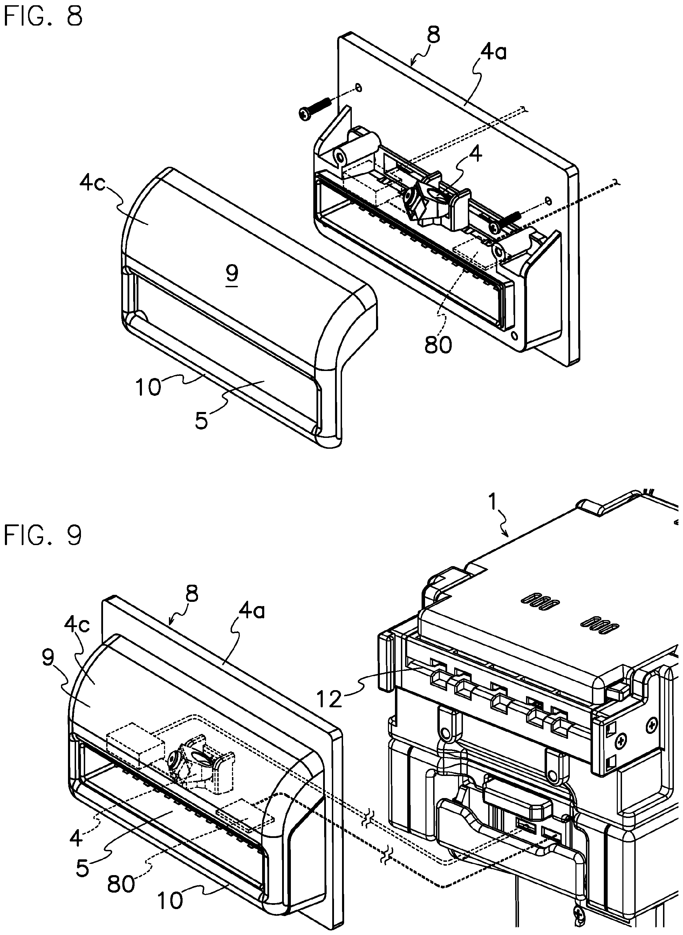

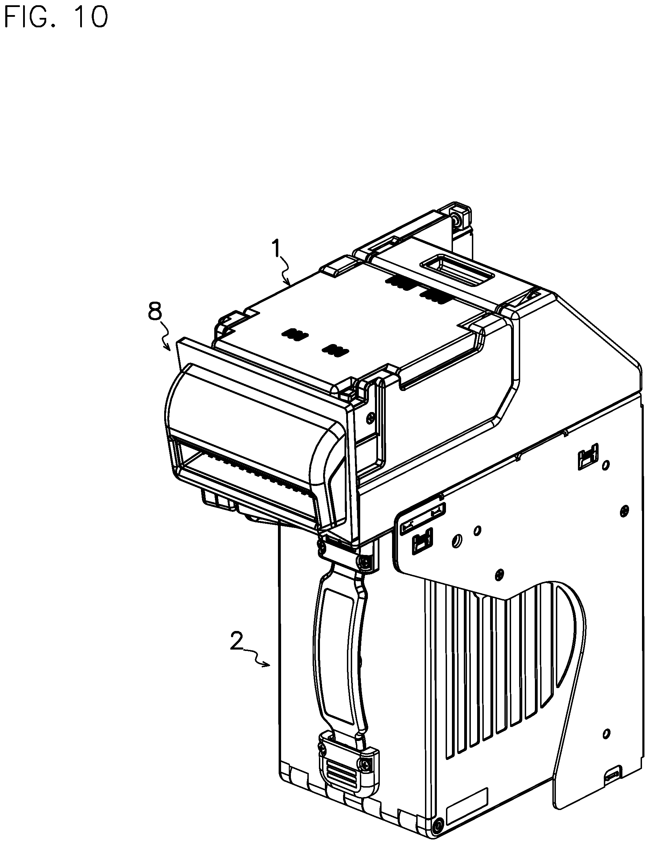

Frame (4a) shown in Figure 3, comprises a back plate (4e) vertically arranged in front of bill validator (1), an inlet rim (4f) horizontally attached to back plate (4e) to guide a bill inserted toward bill validator (1), and a table (4g) attached on top of inlet rim (4f) to support camera device (4). Back plate (4e) of frame (4a) may be detachably attached to a front surface of bill validator (1) with known means not shown such as resilient crook or hook. Bill validator (1) shown in Figures 8 to 10 is mounted on a bill handling apparatus not shown and it comprises a bezel (8) and a bill stacker (2). When assembling bill handling apparatus as shown in Figures 8 to 10, bezel (8) is attached to bill validator (1) before or after attaching cover (4c) to frame (4a) of bezel (8) to then attach to bill validator (1) box-like bill stacker (2) with a handle. Consequently, electric lines or harness are connected among camera device (4) within bezel (8), interface (80) and an input/output device attached to a front surface of bill validator (1) to supply electric power from bill validator (1) to camera device (4) and interface (80) in order to establish electric power supply-information communication systems among camera device (4), interface (80) and bill validator (1).

Inlet rim (4f) is secured to frame (4a) to form an insertion opening (5) connected to bill inlet (12) of bill validator (1) and a table (4g) on top of inlet rim (4f). Cover (4c) comprises a curved upside (9) for defining dark room (4d) in which camera device (4) is arranged invisibly from outside, and a rectangular casing (10) integrally connected to the bottom of curved upside (9). When a bill is inserted into insertion opening (5) of inlet rim (4f), it is detected by inlet sensor (13) provided in bill inlet (12) of bill validator (1) without any other bill detectors attached to bezel (8).

Inlet sensor (13) of bill validator (1) detects inserted bill and generates a detection signal to validation controller (14) that thereby immediately triggers conveyer (17) in bill validator (1) and at the same time, continuously operates shutter actuator of camera device (4) to open and close for seriography. This is to operate shutter in camera device (4) in synchronization with detection signal from inlet sensor (13) in order to definitely shoot face images of a user keeping seated in front of bezel (8).

Frame (4a) includes a connector (4b) arranged behind inlet rim (4f) and secured to frame (4a) in front of bill validator (1). Both of insert opening (5) of inlet rim (4f) and connector (4b) serve to positively guide bills put into insert opening (5) to bill inlet (12) and inlet sensor (13) of bill validator (1).

When someone utilizes bill validator (1), a bill is inserted through insertion opening (5) of inlet rim (4f) into bill inlet (12) and detected by inlet sensor (13) that produces a detection signal to validation controller (14) that then simultaneously drives conveyer (17), scanner (16) and shutter actuator of camera device (4). Accordingly, conveyer (17) transports the bill along passageway (15) while scanner (16) optically scans surface images of the bill moving through passageway (15), and at the same time, camera device (4) takes rapid or consecutive shots of user's changing face. In this way, immediately after inlet sensor (13) produces the detection signal, validation controller (14) receives face image information of user from camera device (4) and bill surface image information from scanner (16) to decide mutual coincidence rates among face image pixels. Also, validation controller (14) stores in validation memory (18) each pair of user's face image information and inserted bill surface image information together with current time indication from timer (36).

Validation controller (14) of bill validator (1) may compare bill image information scanned by scanner (16) with regular bill image information recorded in validation memory (18) to decide authenticity of scanned bill. When validation controller (14) considers scanned bill genuine (or proper) as regular bill image, it drives conveyer (17) that transports and stores the bill in stacker (2), and at the same time, validation controller (14) sends digital monetary information to stacker antenna (31) and stacker transceiver (21) of bill stacker (2) through validation transceiver (3) and validation antenna (11) to store digital monetary information in stacker memory (22) of stacker (2).

Comparing bill image information scanned by scanner (16) with regular bill image information recorded in validation memory (18), validation controller (14) decides that these are not agreeable to each other and then it drives conveyer (17) in the adverse direction to return unacceptable bill to bill inlet (12) of passageway (15) to allow the user to recall it from bill inlet (12) through insertion opening (5) of bezel (8). In the same manner as validation controller (14) decides scanned bill image information as genuine, digital bill information of unaccepted bill is transmitted to stacker transceiver (21) of bill stacker (2) through stacker antenna (31) to store it in stacker memory (22).

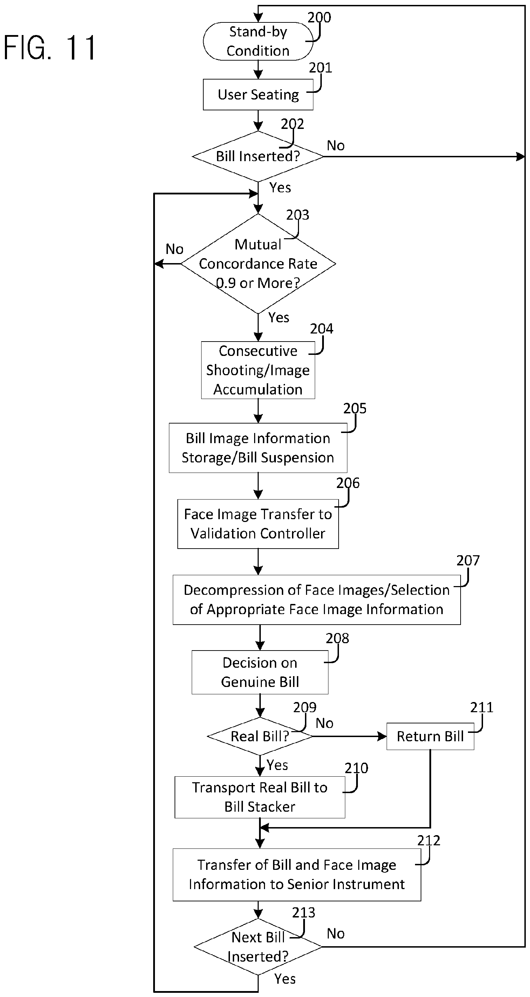

Figure 11 illustrates a flow chart of sequential operations of bezel (8) and bill validator (1) working with bezel (8). Step 200 of Figure 11 shows stand-by condition of bezel (8) and bill validator (1) while validation controller (14) is waiting for detection signal from inlet sensor (13). When someone sits down on a seat in front of bezel (8) (Step 201) and puts a bill into insertion opening (5) of bezel (8) (Step 202), inlet sensor (13) in bill validator (1) detects inserted bill to generate a detection signal and to go on to Step 203. Step 202 shows that no insertion of a bill into insertion opening (5) returns processing to Step 200.

Inlet sensor (13) detects a bill inserted into bill inlet (12) and produces a detection signal that is forwarded to validation controller (14) to drive camera device (4) that then rapidly shoots user's face images. Specifically, camera device (4) consecutively takes user's changing face images, selects from taken face images, those of the mutual concordance rate 0.9 or more in a pixel unit and then forwards them to validation controller (14) of bill validator (1) (Step 203) that accumulates them in validation memory (18) (Step 204). When camera device (4) takes images of changing or restless user face, it cannot shoot face images as the mutual concordance rate less than 0.9 in a pixel unit, so the processing returns to Step 203. With user's sitting stationary condition on a chair, validation controller (14) decides the mutual concordance rate 0.9 or more in a pixel unit for face image information and takes rapid shots of user's face by camera device (4), and so, it sends face image information of rapid shots from camera device (4) to validation memory (18) for storage of the information in validation memory (18) while sequence moves from Step 203 to 204.

Then, operation moves to Step 205 where validation controller (14) sends bill image information scanned by scanner (16) through validation transceiver (3), validation antenna (11) of validation transceiver (3) and stacker antenna (31) of stacker transceiver (21) to store bill image information in stacker memory (22). At the same time, validation controller (14) drives conveyer (17) to move the bill to a temporal retention or escrow position for the suspension.

Next, validation controller (14) receives user's face image information from photocell (43) (Step 206) and selects appropriate face image information (Step 207). Also, validation controller (14) compares bill image information scanned by scanner (16) with genuine bill images recorded in host server (100) or validation memory (18) for discrimination (Step 208). When validation controller (14) decides that scanned bill images do not agree with genuine bill images in Step 209, it drives conveyer (17) in the adverse direction (Step 211) to return unaccepted bill to bill inlet (12) of passageway (15) so that the user can recall returned bill at bill inlet (12). In this embodiment of the invention, similarly to image information of bills to be considered true, unaccepted digital bill image information is also transmitted from validation controller (14) through stacker antenna (31) and stacker transceiver (21) of bill stacker (2) to store sent digital bill image information in stack memory (22) of bill stacker (2).

Considering the bill to be genuine in Step 209, validation controller (14) drives conveyer (17) to carry the bill to bill stacker (2) and accumulate it therein (Step 210), and at the same time, validation controller (14) forwards digital bill information through validation transceiver (3), validation antenna (11) and stacker antenna (31) to stacker transceiver (21) to retain the information in stacker memory (22) of bill stacker (2). Validation controller (14) also forwards digital monetary information and face image information to senior instrument of host server (100) (Step 212).

Finally sequence goes to Step 213 where validation controller (14) checks out whether a next bill is inserted into insertion opening (5) of bezel (8). If no bill is inserted with lack of detection signal from inlet sensor (13) in Step 213, processing returns to Step 200, but a next or new bill is inserted, it returns to Step 203.

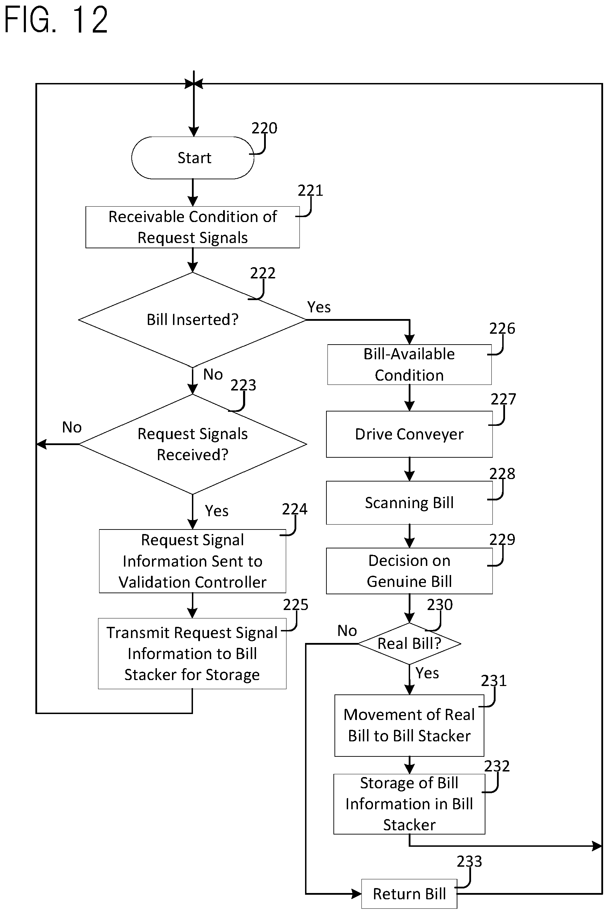

Figure 12 indicates a flow chart of operational sequences of the bill processor according to the present invention. Processing starts from Step 220 of stand-by condition and goes to Step 221 where shift circuit (19) keeps each of antennas in the telecommunication-available condition of remote signals. Specifically, at the beginning of operational sequences, validation controller (14) of bill validator (1) allows shift circuit (19) to turn on communication between validation antenna (11) of validation transceiver (3) and bezel antenna (91) of the interface (80) and also to turn off communication between validation antenna (11) of validation transceiver (3) and stacker antenna (31) of stacker transceiver (21), keeping validation antenna (11) in the receivable condition of remote signals. Then, operation goes to Step 222 where validation controller (14) decides whether a bill is inserted into bill inlet (12) or not with or without detection signal from inlet sensor (13). No bill being put into bill inlet (12), protocol moves to Step 223 where validation controller (14) decides whether or not to receive remote signals. Without receiving remote signals, processing returns to Step 220, but reception of remote signals goes to Step 224 where interface (80) diverts to validation controller (14) remote signals that are then transmitted to bill stacker (2) to store in stacker memory (22) e-money contained in remote signals for accumulation, returning to Step 220. When e-money information from mobile terminal (70) is stored in stacker memory (22) of bill stacker (2), shift circuit (19) keeps off communication between validation antenna (11) of validation transceiver (3) and stacker antenna (31) of stacker transceiver (21), and keeps on communication between validation antenna (11) of validation transceiver (3) and bezel antenna (91) of interface (80) to temporarily store e-money information from mobile terminal (70) in validation memory (18) through interface (80) and validation transceiver (3). Then, shift circuit (19) keeps off communication between validation antenna (11) of validation transceiver (3) and bezel antenna (91) of interface (80) and keeps on communication between validation antenna (11) of validation transceiver (3) and tacker antenna (31) of stacker transceiver (21) to store in stacker memory (22) e-money information temporarily retained in validation memory (18) through validation transceiver (3) and stacker transceiver (21).

When a bill is inserted into insertion opening (5) of bezel (8) in Step 222, inlet sensor (13) generates a detection signal to validation controller (14) that makes shift circuit (19) to turn off communication between validation antenna (11) of validation transceiver (3) and bezel antenna (91) of interface (80) and at the same time turn on communication between validation antenna (11) of validation transceiver (3) and tacker antenna (31) of stacker transceiver (21). Accordingly, bill validator (1) is switched to the bill-available condition (Step 226) where validation controller (14) triggers conveyor (17) (Step 227) to move the bill along passageway (15) and simultaneously drives scanner (16) to optically scan surface images of the bill through passageway (15) (Step 228). When the bill comes to the escrow position of passageway (15), drived conveyor (17) is stopped where validation controller (14) judges authenticity of the bill in view of bill image information from scanner (16) (Step 229).

In Step 230, validation controller (14) compares bill image patters from scanner (16) with genuine bill image patterns held in validation controller (14), and when these patterns do not match each other, processing goes to Step 233 where conveyer (17) is driven in the adverse direction to return the bill to bill inlet (12) of Step 220. When both patters match in Step 230, processing moves to Step 231 where the bill is moved from the escrow position to bill stacker (2) for accumulation of the bill, and concurrently validation controller (14) transmits bill information to stacker memory (22) through validation transceiver (3) and validation antenna (11) of bill validator (1) and tacker antenna (31) of stacker transceiver (21) to store bill information in stacker memory (22) (Step 232) returning to Step 220. Bill information includes bill images, denominations, numbers, printed numbers and face images of users relevant to inserted bills.

In this way, when a bill is inserted into bill validator (1), it discriminates the bill and when it is considered to be genuine, the bill is transported into bill stacker (2) to accumulate it therein. When a user operates mobile terminal (70) to transmit e-money information therefrom through telecommunication, validation transceiver (3) of bill validator (1) receives e-money information through interface (80) in bezel (8) and diverts it to stacker transceiver (21) in bill stacker (2) to store e-money in stacker memory (22) so that e-money information may be sent from mobile terminal (70) to safely store it in stacker memory (22).

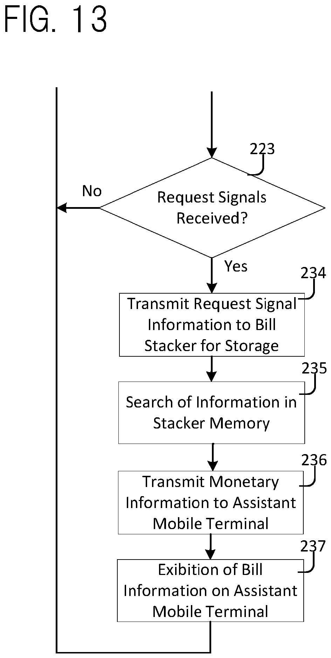

Figure 13 shows a partly revised flowchart containing Steps 234 to 237 that replace Steps 224 to 225 in Figure 12 with reminding Steps in Figure 13 being the same as those in Figure 12. The second bill processor of the present invention does such operations that interface (80) receives telecommunication information signals inclusive of request signals from mobile terminal (70) through mobile antenna (76) and bezel antenna (91) in Step 223 of Figure 13, and that validation transceiver (3) of bill validator (1) receives request signals sent from interface (80) to divert request signals to validation controller (14) in Step 234. Then, validation controller (14) retrieves in stacker memory (22) monetary information suitable to received request signals in Step 235. Then, validation controller (14) transmits resulted monetary information to mobile terminal (70) through interface (80) and mobile antenna (76) in Step 236 to exhibit monetary information on a display of mobile terminal (70) in Step 237. When validation controller (14) transmits monetary information to mobile terminal (70) for exhibitation, shift circuit (19) keeps off communication between validation antenna (11) of validation transceiver (3) and bezel antenna (91) of interface (80), and at the same time keeps on communication between validation antenna (11) of validation transceiver (3) and tacker antenna (31) of stacker transceiver (21) to temporally store monetary information from stacker memory (22) in validation memory (18) through stacker transceiver (21) and validation transceiver (3). Then, shift circuit (19) keeps off communication between validation antenna (11) of validation transceiver (3) and stacker antenna (31) of stacker transceiver (21), and simultaneously keeps on communication between validation antenna (11) of validation transceiver (3) and bezel antenna (91) of interface (80) to store in memory (72) of mobile terminal (70) monetary information sent from validation memory (18) through validation transceiver (3) and transceiver (74) and mobile antenna (76) of mobile terminal (70) to exhibit monetary information on display (75).

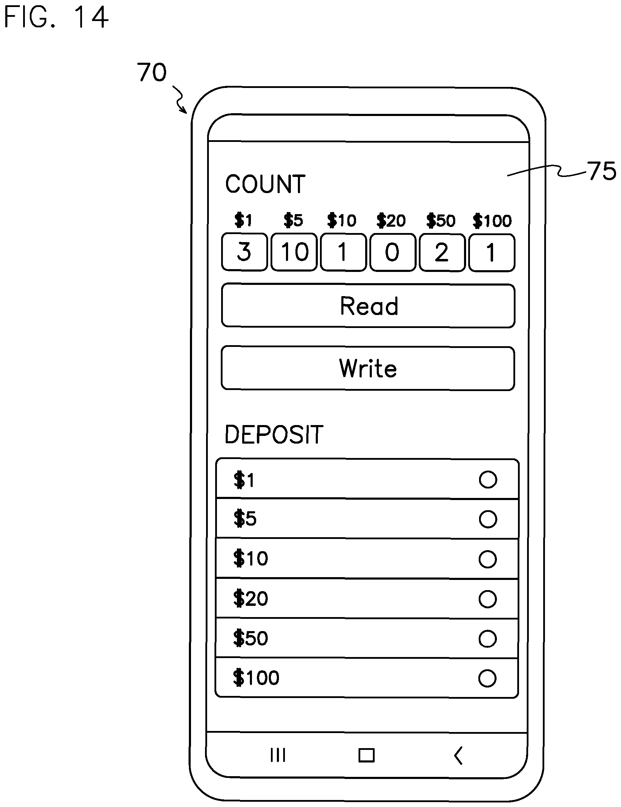

Figure 14 illustrates an example of a display (75) to indicate a monetary information image on mobile terminal (70). For example, monetary information images are shown the number of bills per denomination and the number of remittance of e-money. In this case, an attendant's mobile terminal (70) can transmit not only monetary information to interface (80) but also can make a search of face image information relevant to monetary information of each bill in stack memory (22) through validation controller (14) to send retrieved monetary information and face image information to mobile antenna (76) and mobile terminal (70) through interface (80) in order to indicate retrieved information on mobile terminal (70) in Step 237. Validation memory (18) may temporarily put away face image information sent from camera device (4) and bill image information sent from scanner (16) to forward those kinds of information to mobile terminal (70) for indication on display (75) so that a manager for the bill processor can withdraw from validation memory (18) monetary information and face image information that can be transmitted to mobile terminal (70) to show them on display (75) for users who might raise douts on monetary information. Face image information is forwarded and stored in host server (100) connected to bill validator (1) via network interface (81) for telecommunication, and bill image information is forwarded and stored in stack memory (22) of bill stacker (2) and then face image information and bill image information may be deleted from validation memory (18).

In this way, when a user puts a true bill into bill balidator (1), it is accumulated on stacker (2) and at the same time, bill validator (1) transmits discrimination information of the bill to stacker transceiver (21) of bill stacker (2) that holds in stacker memory (22) discrimination information received by stacker transceiver (21). When a user requests to look at monetary information accumulated in stacker memory (22) for confirmation, the requester sends request information or request signals from mobile terminal (70) to interface (80) in bezel (8) to receive it by validation transceiver (3) that then diverts it to stacker transceiver (21) of bill stacker (2). In this case, stacker transceiver (21) makes a search in stacker memory (22) of monetary information related to request signals, and sends retrieved information to mobile terminal (70) through interface (80) to show monetary information on display (75) of mobile terminal (70) in order to comfirm monetary information by the requester.

Bill validators not shown are mounted in an inner chamber covered by a closable door in a bill handling apparatus such as gaming machines, automatic teller machines, ticket vending machines, adjustment machines or vending machines, and a bezel (8) is secured to bill validator (1) that is so retained within bill handling apparatus that bezel (8) extends outside through an opening formed on closed door of bill handling apparatus. Accordingly, the bill processor accoding to the pesent invention is featured by bezel (8) that holds inner interface (80) for receiving e-money information sent from mobile terminal (70). Bezel (8) may be attached to bill validator (1) without dismountling it or without making a hole in a housing of bill handling apparatus to easily and inexpensively provide existing bill validator or bill handling apparatus with e-money receiving function and monetary information display function through interface (80).

The bill processor of the invention is advantageous in that stacker memory (22) of bill stacker (2) may store both information of valuable papers such as bills and coupons and information of electronic currency such as e-money and vuitual currency (crypto assets) to record and centrally manage the received total money put into bill handling apparatus. For example, if the bill processors of the invention are applied to a plurality of gaming machines (82) installed in a casino, a manager can read out necessary information in stacker memory (22) from a management terminal (102) to exactly understand sales proceeds in each gaming machine (82).

Enbodiments of the present invention may be changed in various ways. For example, interface (80) of bezel (8) may be connected through a network interface (81) to gaming machines (82), a host server (100) and an alarm device (101). Host server (100) may record face image information of dangerous persens, and compare shot face image information sent from photocell (43) in camera device (4) with recorded face mage information of dangerous persons. Matching shot and recorded face images in the information, validation controller (14) may stop operation of bill validator (1) or trigger alarm device (101) to circumferentially generate visual or acoustic alarm signals for high security.

The foregoing embodiments show examples wherein a user may transmit e-money information from mobile terminal (70) to bezel (8) to retain e-money information in stack memory (22) and adversely an operator may read out e-money information stored in stack memory (22) to a person's own mobile terminal (70). An attendant in casino may retrieve e-money information stored in stack memory (22) to mobile terminal (70) for business.

The foregoing embodiment may also comprise an alternative or additional interface (80) in bezel (8) provided in bill validator (1). In this case, e-money information is emitted from mobile terminal (70) to receive it by interface (80) in bill validator (1) that is further transmitted from validation transceiver (3) of bill validator (1) to stack transceiver (21) of bill stacker (2) to store e-money information in stacker memory (22).

The foregoing embodiment may trigger camera device (4) by detection signal of inlet sensor (13). Alternatively, any sensor or sensors may be used to detect an action or approach of someone who intends to insert a bill into bill validator to drive camera device (4) based on sensor's output. Like a dashboard camera for vehicles, camera device (4) is always kept in the operating state to temporarily store in an image storage, images taken by camera device (4). At the time of detection of an inserted bill, before- and after-shot images may be cut out from image storage to take best suited face images of users for record or recognition. Incidentally, best suited face images for facial recognition are selected from those that include a certain featured matching rate or more of facial symmetric components such as eyes, a nose or ears, however explanation is omitted herein about such a selecting method for treatment with known algorithm.

Bezels (8) used for the present invention may be utilized in various ways. For example, they may include applications for face recognition such as consumer relationship management (in black lists or loyal customer list), user information management (gender, age, customer style, time zone, purchase preference). In the embodiments of the invention, the bill handling apparatus may read user identification documents such as driver licenses, passports or ID cards in addition to valuable papers such as bills and coupons. In this case, bill handling apparatus may compare face images taken by camera device (4) with user identification documents to confirm identification of users. Moreover, bill handling apparatus may put software or application into practice for registration of gambling addiction (by individual declaration) utilizing face images taken by camera device (4).

Camera device (4) may read two-directional (2D) code for cashless electric payment. It may read 2D code indicated on display (75) of mobile terminal (70) such as smart phones to utilize camera device (4) for an operation terminal of purchase menu, etc. In addition, the present invention would be available in payment of admission fees, receipt of coupons, receipt of tickets when purchasing meal tickets from vending machines (for product exchange, discount or point addition) such as coupons, entry/exit management cards, membership cards, player's cards, award cards, return management of rental equipment (vending machines), substitution of transportation passes, ID management of payment terminals, ID management of cash register payment terminals, gas station payments (discounts, point addition, etc.), and the present invention may be used for self-checkout payments (discounts, point addition).

Camera device (4) may be used to capture images for detecting body temperatures, for night vision cameras, TITO (Ticket-In Ticket-Out) ticket substitute (facial authentication), player's card or award card substitute (facial authentication), combined authentication of driver's license and face (impersonation prevention), player observation in gaming markets, facial recognition payments, recording of evidence upon tampering equipment, information on people's movement or crowded conditions, motion control, preference analysis by reading facial expressions in games, behavioral analysis based on criminal psychology.

### Industrial Applicability

The bill processor according to the present invention is provided with the bezel that may be attached at the front of an existent bill validator for discerning authenticity of inserted bills to store in stacker memory of validation stacker e-money information from mobile terminal through interface provided in bezel. Accordingly, not only bills, but also e-money may be accumulated in gaming machines, automatic teller machines, ticket vending machines, adjustment machines or vending machines, and also e-money information stored in these machines can be retrieved for visual observation of the information.

### Description of Symbols

(1): A bill validator; (4): A camera device; (4a): A frame; (4b): A connector; (4c): A cover; (4d): A dark room; (4f): An inlet rim; (4g): A table; (4h): A threaded hole; (5): An insertion opening; (8): A bezel; (9): A curved upside; (10): A rectangular casing; (11): A validation antenna; (12): A bill inlet; (13): An inlet sensor; (14): A validation controller; (15): A passageway; (16): A scanner; (17): A conveyer; (18): A validation memory; (20): An opening; (21): A stacker transceiver; (22): A stacker memory; (27): Annular projections; (28): Annular grooves; (41): A camera body; (42): A lens; (43): A photocell; (45): A perforation; (50): A screw; (70): A mobile terminal; (80): An interface; (81): A network interface; (82): A gaming machine; (100): A host server;

## Claims

1. A bill processor comprising:
an interface (80) for receiving electronic currency information transmitted from a mobile terminal (70);
a bill validator (1) for discriminating a bill inserted from an insertion opening (5), the bill validator (1) comprising a validation transceiver (3) for receiving the electronic currency information transmitted from the interface (80); and
a bill stacker (2) for accumulating bills considered genuine by and forwarded from the bill validator (1);
wherein the bill stacker (2) comprises a stacker transceiver (21) for receiving electronic currency information transmitted from the validation transceiver (3) of the bill validator (1) and a stacker memory (22) for storing the electronic currency information sent from the stacker transceiver (21).

2. A bill processor comprising:
a bezel (8) that includes an interface (80) for receiving electronic currency information transmitted from a mobile terminal (70);
a bill validator (1) for discriminating a bill inserted through an insertion opening (5) of the bezel (8), the bill validator (1) comprising a validation transceiver (3) for receiving electronic currency information sent from the interface (80); and
a bill stacker (2) for accumulating bills considered genuine by and supplied from the bill validator (1);
wherein the bill stacker (2) comprises a stacker transceiver (21) for receiving electronic currency information transmitted from the validation transceiver (3) of the bill validator (1) and a stacker memory (22) for storing the electronic currency information sent from the stacker transceiver (21).

3. A bill processor comprising:
a bezel (8) that has an interface (80) for receiving remote signals from a mobile terminal (70), the remote signals being inclusive of a request information;
a bill validator (1) for discriminating a bill inserted through an insertion opening (5) of the bezel (8) to generate discrimination information of the bill; and
a bill stacker (2) for accumulating bills considered genuine by and supplied from the bill validator (1);
wherein the bill validator (1) comprises a validation transceiver (3) for transmitting the discrimination information of the bill;
the bill stacker (2) comprises a stacker transceiver (21) for receiving the discrimination information of the bill sent from the validation transceiver (3) of the bill validator (1) and a stacker memory (22) for storing the discrimination information sent from the stacker transceiver (21);
the validation transceiver (3) of the bill validator (1) receives the request information sent from the interface (80) and diverts the request information to the stacker transceiver (21) of the bill stacker (2),
the stacker transceiver (21) of the bill stacker (2) receives the request information and retrieves in the stacker memory (22) electronic currency information suitable to the request information to transmit the retrieved electronic currency information to the mobile terminal (70) through the interface (80).

4. The bill processor of any one of claims 1 to 3, wherein the interface (80) comprises a bezel antenna (91) for telecommunication of electronic currency information with the mobile terminal (70); and
the electronic currency information is transmitted through the bezel antenna (91) of the interface (80) and the validation transceiver (3) of the bill validator (1) to store the electronic currency information in the stacker memory (22) of the bill stacker (2).

5. The bill processor of any one of claims 1 to 3, wherein the stacker transceiver (21) of the bill stacker (2) is provided with a stacker antenna (31) for telecommunication with a validation antenna (11) of the validation transceiver (3),
the bill validator (1) comprises a shift circuit (19) for switching on or off the communications between the validation antenna (11) of the validation transceiver (3) and the bezel antenna (91) of the interface (80) and between the validation antenna (11) of the validation transceiver (3) and the stacker antenna (31) of the stacker transceiver (21); and
for a telecommunication between the mobile terminal (70) and interface (80), the shift circuit (19) keeps off communication between the validation antenna (11) of the validation transceiver (3) and the stacker antenna (31) of the stacker transceiver (21) and also keeps on communication between the validation antenna (11) of the validation transceiver (3) and the bezel antenna (91) of the interface (80) to allow the telecommunication between the mobile terminal (70) and interface (80).

6. The bill processor of any one of claims 1 to 3, wherein the stacker transceiver (21) of the bill stacker (2) is provided with a stacker antenna (31) for telecommunication with the validation antenna (11) of the validation transceiver (3),
the bill validator (1) comprises a shift circuit (19) for switching on or off the communications between the validation antenna (11) of the validation transceiver (3) and the bezel antenna (91) of the interface (80) and between the validation antenna (11) of the validation transceiver (3) and the stacker antenna (31) of the stacker transceiver (21); and
for a bill-available condition to insert a bill into a passageway (15) of the bill validator (1), the shift circuit (19) keeps off communication between the validation antenna (11) of the validation transceiver (3) and the bezel antenna (91) of the interface (80) and also keeps on communication between the validation antenna (11) of the validation transceiver (3) and the stacker antenna (31) of the stacker transceiver (21) to allow the telecommunication between the validation transceiver (3) and the stacker transceiver (21).

7. The bill processor of any one of claims 1 to 3, wherein for a bill-available condition to insert a bill into a passageway (15) of the bill validator (1), the shift circuit (19) keeps off communication between the validation antenna (11) of the validation transceiver (3) and the bezel antenna (91) of the interface (80) and also keeps on communication between the validation antenna (11) of the validation transceiver (3) and the stacker antenna (31) of the stacker transceiver (21) to store in the stacker memory (22) of the bill stacker (2), money information of the bill discriminated by the bill validator (1),
for a telecommunication between the mobile terminal (70) and interface (80) without insertion of a bill into the passageway (15), the shift circuit (19) turns off communication between the validation antenna (11) of the validation transceiver (3) and the stacker antenna (31) of the stacker transceiver (21) and also turns on communication between the stacker antenna (31) of the validation transceiver (3) and the bezel antenna (91) of the interface (80).
